# EUROPEAN PATENT SPECIFICATION

(11) **EP 3 439 393 B1**
(45) Date of publication and mention of the grant of the patent: **02.09.2020**
(21) Application number: 17773176.7
(22) Date of filing: 27.03.2017
(51) Int. Cl.: H04L 5/00, H04W 72/04

(54) **TRANSMISSION RESOURCE INDICATION METHOD, BASE STATION, USER EQUIPMENT AND TRANSMISSION RESOURCE INDICATION SYSTEM**
VERFAHREN ZUM ANZEIGEN VON ÜBERTRAGUNGSRESSOURCEN, BASISSTATION, TEILNEHMERGERÄT UND SYSTEM ZUM ANZEIGEN VON ÜBERTRAGUNGSRESSOURCEN
PROCÉDÉ D'INDICATION DE RESSOURCES DE TRANSMISSION, STATION DE BASE, ÉQUIPEMENT D'UTILISATEUR ET SYSTÈME D'INDICATION DE RESSOURCES DE TRANSMISSION

(30) Priority: 31.03.2016 CN 201610202038
(43) Date of publication of application: 06.02.2019
(73) Proprietor: China Academy of Telecommunications Technology, Hai Dian District Beijing 100191 (CN)
(72) Inventor: SI, Qianqian, Beijing 100191 (CN); PAN, Xueming, Beijing 100191 (CN); CHENG, Fangchen, Beijing 100191 (CN); GAO, Xuejuan, Beijing 100191 (CN); SUN, Shaohui, Beijing 100191 (CN)
(74) Representative: Studio Torta S.p.A.
(86) International application number: PCT/CN2017/078281
(87) International publication number: WO 2017/167146

(56) References cited:
- WO-A1-2016/011375
- CN-A- 101 400 072
- CN-A- 104 468 030
- US-A1- 2011 171 985
- ERICSSON: "Design of DL DCI for short TTI", 3GPP DRAFT; [LATRED] R1-160931 , vol. RAN WG1, no. Malta; 20160215 - 20160219 14 February 2016 (2016-02-14), XP051053545, Retrieved from the Internet: URL:http://www.3gpp.org/ftp/Meetings_3GPP_ SYNC/RAN1/Docs/ [retrieved on 2016-02-14]

## Description

### TECHNICAL FIELD

The present disclosure relates to the field of communication technology, in particular to a transmission resource indication method, a base station, a User Equipment (UE), and a transmission resource indication system.

### BACKGROUND

Along with the development of mobile technology, a mobile communication system may need to support more types of services in future. Currently, a Transmission Time Interval (TTI) for the mobile communication system has a fixed length of 1ms, and resources in a constant amount are occupied within each TTI, i.e., the TTI is not dynamically configured in the current mobile communication system. When the services of more types occur for the mobile communication system in future, there exists a trend for the mobile communication system to dynamically configure the TTI length and the resources within the TTI in accordance with the service requirement. However, when the TTI is configured dynamically, the transmission resources need to be dynamically configured too. There is an urgent need to provide a scheme so as to enable a UE to know the transmission resources.

Document by ERICSSON: "Design of DL DCI for short TTI", 3GPP DRAFT, R1-160931, vol. RAN WG1, 14 February 2016, discloses DCI for downlink transmission without short TTIs.

Patent document US 2011/0171985 discloses methods and apparatus for a UE to transmit signals in response to the reception of a DCI format transmitted from a BS of a communication system.

However, the above-identified issues are not overcome.

### SUMMARY

An object of the present disclosure is to provide a transmission resource indication method, a base station, a UE and a transmission resource indication system, so as to enable the UE to know a transmission resource.

Aspects of the present invention are provided in the independent claims.

Preferred embodiments are provided in the dependent claims. The present invention is defined by the appended claims and limited only by their scope. Any embodiment and/or aspect (of the invention and/or disclosure) referred to in this description and not fully falling within the scope of said appended claims is to be interpreted as an example useful for understanding the present invention.

According to the embodiments of the present disclosure, the UE receives the DCI from the base station, and the DCI includes the indication information indicating the TTI length for the transmission resource, the time-domain position of the transmission resource and the frequency-domain of the transmission resource. Then, the UE determines the transmission resource in accordance with the indication information and performs the transmission on the transmission resource. As a result, it is able for the UE to know the transmission resource.

### BRIEF DESCRIPTION OF THE DRAWINGS

Fig.1 is a schematic view showing a network according to one embodiment of the present disclosure;
Fig.2 is a flow chart of a transmission resource indication method according to one embodiment of the present disclosure;
Fig.3 is a schematic view showing the indication of a transmission resource according to one embodiment of the present disclosure;
Fig.4 is another schematic view showing the indication of the transmission resource according to one embodiment of the present disclosure;
Fig.5 is a yet another schematic view showing the indication of the transmission resource according to one embodiment of the present disclosure;
Fig.6 is a schematic view showing another transmission resource indication method according to one embodiment of the present disclosure;
Fig.7 is a schematic view showing a UE according to one embodiment of the present disclosure;
Fig.8 is a schematic view showing a base station according to one embodiment of the present disclosure;
Fig.9 is another schematic view showing the UE according to one embodiment of the present disclosure;
Fig.10 is another schematic view showing the base station according to one embodiment of the present disclosure; and
Fig.11 is a schematic view showing a transmission resource indication system according to one embodiment of the present disclosure.

### DETAILED DESCRIPTION OF THE EMBODIMENTS

In order to make the objects, the technical solutions and the advantages of the present disclosure more apparent, the present disclosure will be described hereinafter in a clear and complete manner in conjunction with the drawings and embodiments.

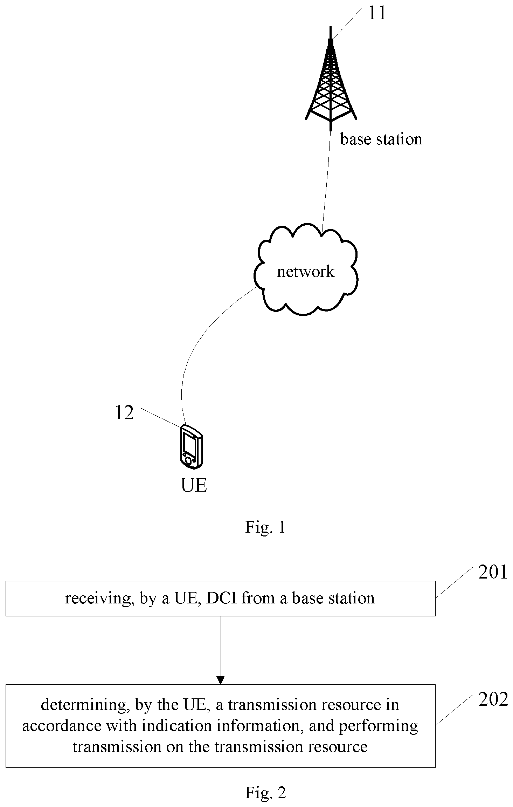

As shown in Fig.1 which is a schematic view showing a network according to one embodiment of the present disclosure, the network includes a base station 11 and a UE 12. The base station 11 may be an evolved Node B (eNB) or other base station. It should be appreciated that, a type of the base station 11 will not be particularly defined herein. The base station 11 may be in communication with the UE 12. In Fig.1, the base station 11 may be in wireless communication with the UE 12. The UE 12 may be a terminal such as mobile phone, tablet personal computer, laptop computer, Personal Digital Assistant (PDA), Mobile Internet Device MID) or wearable device. It should be further appreciated that, a type of the UE 12 will not be particularly defined herein.

Based on the network in Fig.1, the present disclosure provides in some embodiments a transmission resource indication method which, as shown in Fig.2, includes: Step 201 of receiving, by a UE, DCI from a base station, the DCI including indication information indicating one or more of a TTI length for a transmission resource, a time-domain position of the transmission resource and a frequency-domain of the transmission resource; and Step 202 of determining, by the UE, the transmission resource in accordance with the indication information and performing transmission on the transmission resource.

A TTI may be configured dynamically or non-dynamically in accordance with service requirements, which will not be particularly defined herein. In addition, one or more of the TTI length for the transmission resource, the time-domain position of the transmission resource and the frequency-domain of the transmission resource may be indicated through the DCI. As a result, it is able to support more types of services in a better manner even when the TTI is changed.

In addition, the transmission resource may be a transmission resource for scheduled data. Here, the data may be uplink data or downlink data for the UE. The DCI may further include scheduling information for scheduling the data, i.e., the transmission resource may be a transmission resource for the data scheduled by the DCI. Of course, the transmission resource will not be particularly defined herein. For example, in some scenarios, the transmission resource may be a transmission resource for signaling. The transmission resource may be further understood as a transmission resource occupied by a physical shared channel.

The time-domain position may be a time-domain starting position of the transmission resource. Of course, in some scenarios, the time-domain position may be the time-domain starting position and a time-domain ending position of the transmission resource, which will not be particularly defined herein. The frequency-domain position may be a position of a RB or subcarrier occupied by the transmission resource, which will not be particularly defined herein either. In the embodiments of the present disclosure, the UE may determine the transmission resource and perform the transmission in accordance with one or more of the above three parameters.

In a possible embodiment of the present disclosure, Step 201 may include receiving, by the UE, the DCI transmitted by the base station through a PDCCH having a temporal length smaller than or equal to 1ms.

In the embodiments of the present disclosure, the DCI may be transmitted through the PDCCH having a temporal length smaller than or equal to 1ms. The PDCCH may be a Short Physical Downlink Control Channel (S-PDCCH). For example, the DCI may be transmitted to the UE through the S-PDCCH having a temporal length of 0.5ms, i.e., within a TTI of 0.5ms.

In a possible embodiment of the present disclosure, the transmission resource has a temporal length smaller than or equal to 1ms and is configured to transmit a PUSCH or a PDSCH.

In the embodiments of the present disclosure, the temporal length of the transmission resource may be smaller than or equal to 1ms, and the transmission resource may be configured to transmit the PUSCH or PDSCH, i.e., the transmission resource may be a transmission resource occupied by the PUSCH or PDSCH. In this way, the UE may transmit uplink or downlink data, or uplink or downlink signaling, on the transmission resource through a physical shared channel, which will not be particularly defined herein. The physical shared channel may be a PUSCH, a PDSCH, a Short Physical Uplink Shared Channel (S-PUSCH) or a Short Physical Downlink Shared Channel (S-PDSCH).

In a possible embodiment of the present disclosure, the indication information may indicate the TTI length for the transmission resource through M bits, where M is a positive integer greater than or equal to 1.

In the embodiments of the present disclosure, the TTI length for the transmission resource may be indicated through M bits, e.g., 3 or 4 bits.

In a possible embodiment of the present disclosure, the TTI length may include one or more OFDM symbols, e.g., the indication information may indicate the quantity of OFDM symbols for the transmission resource through M bits.

For example, the quantity of the OFDM symbols for the transmission resource may be indicated through 2, 3 or 4 bits. For another example, 3 OFDM symbols occupied by the transmission resource may be indicated to the UE through 0011, or 2 OFDM symbols occupied by the transmission resource may be indicated to the UE through 010.

In a possible embodiment of the present disclosure, the indication information may indicate the quantity of elements corresponding to the TTI length for the transmission resource in a set of TTI lengths through M bits. The base station may negotiate with the UE in advance so as to determine the set of TTI lengths. This set may include one or more elements, and each element represent one TTI length. For example, for the set of TTI lengths {1,2,3,4,7,14}, the elements represent the TTI lengths having 1, 2, 3, 4, 7 and 11 OFDM symbols respectively. For another example, 3 OFDM symbols occupied by the transmission resource may be indicated through 010, or 7 OFDM symbols occupied by the transmission resource may be indicated through 100. In this way, the UE may determine the TTI length for the transmission resource merely when the indication information indicates the quantity of elements corresponding to the TTI length for the transmission resource. For example, when a set of variable TTI lengths include K TTI lengths, M=┌log₂*K*┐. Upon the acquisition of a value of M, the UE may determine the TTI length for the transmission resource from the set of TTI lengths.

In a possible embodiment of the present disclosure, the indication information indicates the time-domain position of the transmission resource through N bits, where N is a positive integer greater than or equal to 1.

For example, the time-domain position of the transmission resource may be indicated through 1, 2, 3 or 4 bits. Here, the time-domain position may be the time-domain starting position. Of course, in some scenarios, the time-domain position may also be the time-domain starting positon and the time-domain ending position, which will not be particularly defined herein. For example, the indication information may indicate through a bit 1 that the transmission resource starts to be transmitted from symbol #7, or indicate through 10 that the transmission resource is to be transmitted within a subframe n+2 and indicate through 0 that the transmission resource starts to be transmitted from symbol #0 within the subframe n+2, where n represents a serial number of a current subframe, and # represents a serial number or position of the symbol.

In a possible embodiment of the present disclosure, the indication information may indicate a serial number of a starting subframe for the transmission resource through N bits.

The starting subframe may be understood as a subframe within which the transmission resource starts to be transmitted. For example, the indication information may indicate through 2 bits the subframe within which the transmission resource starts to be transmitted, e.g., 00 represents the current subframe n, 01 represents a next subframe n+1, 02 represents a subframe n+2, and 11 represents a subframe n+3, so as to save the transmission resource.

In a possible embodiment of the present disclosure, the indication information may indicate a serial number of a starting OFDM symbol for the transmission resource through N bits.

The starting OFDM symbol may be understood as an OFDM symbol where the transmission resource starts to be transmitted, and this kind of indication information, it is able to save the transmission resource. For example, the indication information may indicate through 1011 that a serial number of the OFDM symbol where the transmission resource starts to be transmitted is #11, or indicate through 1010 that a serial number of the OFDM symbol where the transmission resource starts to be transmitted is #10. In addition, the indication information may further indicate both the serial number of the starting OFDM symbol and the serial number of the starting subframe. For example, the indication information may indicate through 00 that the starting subframe for the transmission resource is a current subframe and indicate through 1011 that the serial number of the starting OFDM symbol for the transmission resource is #11 in the current subframe, or indicate through 01 that the starting subframe for the transmission resource is a subframe n+1 (n represents a serial number of the current subframe) and indicate through 1010 that the serial number of the starting OFDM symbol for the transmission resource is #10 within the current subframe. Of course, in some scenarios, the indication information may merely indicate a position of the starting OFDM symbol rather than the serial number of the starting subframe, e.g., the position of the starting OFDM symbol may be located within the current subframe or a next subframe by default.

In a possible embodiment of the present disclosure, the indication information may indicate an offset amount between a time-domain starting position of the transmission resource and a predefined position through N bits.

The predefined position may be predefined by the base station through negotiation with the UE in advance. For example, the predefined position may be the time-domain starting position of the transmission resource, or a reference OFDM symbol, e.g., an OFDM symbol at a middle position within one subframe. In addition, the indication information may indicate the offset amount between the starting subframe or starting OFDM symbol for the transmission resource and the predefined position. Because the time-domain starting position of the transmission resource is indicated merely through the offset amount, it is able to save the transmission resource. For example, the indication information may indicate through 10 that the offset amount between the starting OFDM symbol for the transmission resource and the predefined position includes 2 OFDM symbols.

In a possible embodiment of the present disclosure, the indication information may indicate the quantity of elements corresponding to the time-domain starting position of the transmission resource in a set of time-domain starting positions through N bits. In the embodiments of the present disclosure, the base station may negotiate with the UE in advance so as to determine the set of time-domain starting positions. This set of time-domain starting positions may include one or more elements, and each element represents one time-domain starting position. For example, for the set of time-domain starting positions {0,1,2,3}, the elements may represent the serial numbers 0, 1, 2 and 3 of the starting subframes for the transmission resource respectively, where 0 represents the current subframe, and 1 represents a next subframe. In addition, the set of time-domain starting positions may be a set of the starting subframes and the starting OFDM symbols, i.e., the starting subframe and the starting OFDM symbol for the transmission resource may be determined through this set. In this way, the UE may determine the time-domain starting position of the transmission resource merely when the indication information indicates the quantity of elements corresponding to the time-domain starting position of the transmission resource. For example, assuming a set of time-domain starting positions include L time-domain starting positions, N= ┌log₂*L*┐. Upon the acquisition of a value of N, the UE may determine the time-domain starting position of the transmission resource from the set of time-domain starting positions.

In a possible embodiment of the present disclosure, the indication information may indicate the TTI length for the transmission resource and the time-domain position of the transmission resource through Q bits, where Q is a positive integer greater than or equal to 1.

In the embodiments of the present disclosure, through the joint encoding of the bits indicating the TTI length and the time-domain position in the indication information, it is able to reduce the quantity of the bits, thereby to save the transmission resource.

For example, when the TTI length having 1, 2, 3, 4, or 7 OFDM symbols is to be used, there are 12, 6, 4, 3 or 2 possible starting positions of the OFDM symbol within one subframe. When a starting position of the OFDM symbol within a subframe is indicated in a joint encoding manner, merely 5 bits are required, and when the starting position of the OFDM symbol and the subframe are indicated separately, 7 bits are required. The TTI length and the time-domain position have been described hereinabove, and thus will not be particularly defined herein.

In a possible embodiment of the present disclosure, the indication information may indicate the frequency-domain position of the transmission resource through P bits. The frequency-domain position may include a position of a RB occupied by the transmission resource or a position of a subcarrier occupied by the transmission resource, where P is a positive integer greater than or equal to 1.

In the embodiments of the present disclosure, the frequency-domain position of the transmission resource, e.g., the position of the RB or subcarrier occupied by the transmission resource, may be indicated through P bits. Upon the receipt of the indication information, the UE may determine the position of the RB or subcarrier occupied by the transmission resource in accordance with the P bits, and then perform the transmission on the RB or subcarrier.

It should be appreciated that, the above implementation modes of the indication information may be combined, or performed separately. The following description will be given when the indication information indicates the quantity of the OFDM symbols for the transmission resource and the starting OFDM symbol for the transmission resource.

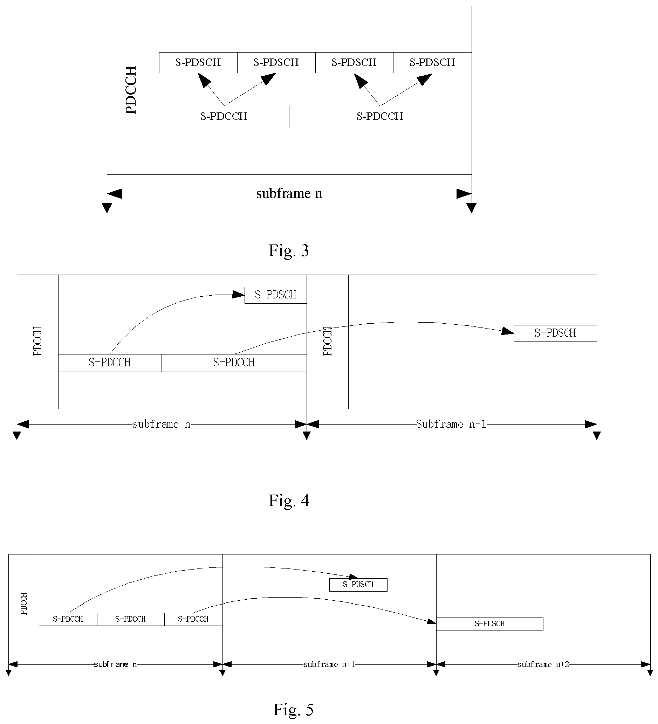

As shown in Fig.3, merely one UE is scheduled by the base station. The base station may transmit a conventional PDCCH at first, which will not be particularly defined herein. The base station may transmit the DCI through an S-PDCCH within a TTI having a length of 0.5ms within a subframe n, i.e., the S-PDCCH has a temporal length of 0.5ms. The DCI indicates the transmission resource occupied by the S-PDSCH. The DCI includes 4 bits for indicating the quantity of the OFDM symbols for the transmission resource occupied by the S-PDSCH and another 4 bits for indicating the serial number of the starting OFDM symbol for the transmission resource occupied by the S-PDSCH. For example, within a first time slot, one piece of DCI may indicate through 0011 that a first S-PDSCH is to be transmitted through 3 OFDM symbols (i.e., the quantity of the OFDM symbols for the transmission resource occupied by the first S-PDSCH is 3) and indicate through 0010 that a serial number of the starting OFDM symbol for the transmission of the first S-PDSCH is #2 (i.e., the serial number of the starting OFDM symbols for the transmission resource occupied by the first S-PDSCH is #2, and the previous two OFDM symbols are used to transmit the conventional PDCCH). Another piece of DCI within the first time slot may indicate through 0011 that a second S-PDSCH is to be transmitted through 3 OFDM symbols, and indicate through 0101 that a serial number of the starting OFDM symbol for the transmission of the second S-PDSCH is #5. Similarly, within a second time slot, one piece of DCI may indicate through 0011 that a third S-PDSCH is to be transmitted through 3 OFDM symbols, and indicate through 1000 that a serial number of the starting OFDM symbol for the transmission of the third S-PDSCH is #8 (the previous two OFDM symbols are used to transmit the conventional PDCCH). Another piece of DCI within the second time slot may indicate through 0011 that a fourth S-PDSCH is to be transmitted through 3 OFDM symbols and indicate through 1011 that a serial number of the starting OFDM symbol for the transmission of the fourth S-PDSCH is #11.

The following description will be given when the indication information indicates the quantity of the OFDM symbols for the transmission resource, the starting subframe for the transmission resource and the starting OFDM symbol for the transmission resource.

As shown in Fig.4, merely one UE is scheduled by the base station. The base station may transmit a conventional PDCCH at first, which will not be particularly defined herein. The base station may transmit the DCI through an S-PDCCH within a TTI having a length of 0.5ms within a subframe n, i.e., the S-PDCCH has a temporal length of 0.5ms. The DCI indicates the transmission resource occupied by the S-PDSCH. The DCI includes 4 bits for indicating the quantity of the OFDM symbols for the transmission resource occupied by the S-PDSCH, 2 bits for indicating the starting subframe for the S-PDSCH (e.g., 00 represents a current subframe n, 01 represents a next subframe n+1, 10 represents a subframe n+2, and 11 represents a subframe n+3), and 4 bits for indicating a serial number of the starting OFDM symbol for the transmission of the S-PDSCH. For example, within a first time slot of the subframe n, the DCI may indicate through 0011 that a first S-PDSCH is to be transmitted through 3 OFDM symbols, indicate through 00 that the scheduled S-PDSCH is to be transmitted within the current subframe, and indicate through 1011 that a serial number of the starting OFDM symbol for the transmission of the first S-PDSCH is #11. Within a second time slot of the subframe n, the DCI may indicate through 0100 that a second S-PDSCH is to be transmitted through 4 OFDM symbols, indicate through 01 that the scheduled S-PDSCH is to be transmitted within the subframe n+1, and indicate through 1010 that a serial number of the starting OFDM symbol for the transmission of the second S-PDSCH is #10.

The following description will be given when the indication information indicates the set of TTI lengths for the transmission resource, the starting subframe for the transmission resource and the time-domain starting position of the transmission resource.

As shown in Fig.5, merely one UE is scheduled by the base station. The base station may transmit a conventional PDCCH at first, which will not be particularly defined herein. An S-PDCCH in a subframe n is transmitted within a TTI having a length of 4 OFDM symbols. The base station may transmit the DCI through the S-PDCCH, and the DCI indicates the transmission resource occupied by an S-PUSCH. The DCI includes 3 bits for indicating a set of the quantity of the OFDM symbols (e.g., {1,2,3,4,7,14}) for the transmission resource occupied by the S-PUSCH, 2 bits for indicating the starting subframe for the S-PUSCH (e.g., 00 represents a current subframe n, 01 represents a next subframe n+1, 10 represents a subframe n+2, and 11 represents a subframe n+3), and 1 bit for indicating a position of the starting OFDM symbol for the transmission of the S-PUSCH (e.g., a possible set of time-domain starting positions may be {0,7}). For example, a first piece of DCI may indicate through 010 that a scheduled S-PUSCH is to be transmitted through 3 OFDM symbols, indicate through 01 that the S-PUSCH is to be transmitted within the subframe n+1, and indicate through 1 that the SPUSCH starts to be transmitted from the OFDM symbol #7. A second piece of DCI may indicate through 100 that a second S-PUSCH is to be transmitted through 7 OFDM symbols, indicate through 10 that the scheduled PUSCH is to be transmitted within the subframe n+2, and indicate through 0 that the S-PUSCH starts to be transmitted from the OFDM symbol #0.

According to the transmission resource indication method in the embodiments of the present disclosure, the UE receives the DCI from the base station, and the DCI includes the indication information indicating one or more of the TTI length for the transmission resource, the time-domain position of the transmission resource and the frequency-domain of the transmission resource. Then, the UE determines the transmission resource in accordance with the indication information and performs the transmission on the transmission resource. As a result, it is able for the UE to know the transmission resource.

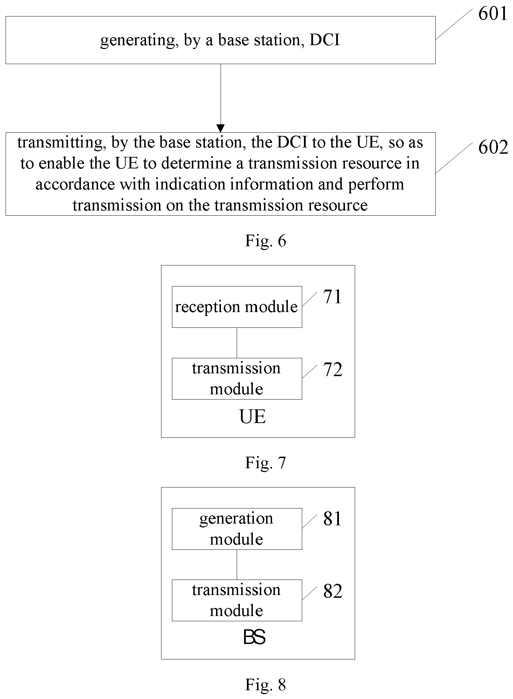

Based on the network in Fig.1, the present disclosure further provides in some embodiments a transmission resource indication method which, as shown in Fig.6, includes: Step 601 of generating, by a base station, DCI, the DCI including indication information indicating one or more of a TTI length for a transmission resource, a time-domain position of the transmission resource and a frequency-domain of the transmission resource; and Step 602 of transmitting, by the base station, the DCI to a UE, so as to enable the UE to determine the transmission resource in accordance with the indication information and perform transmission on the transmission resource. The indication information, the transmission resource, the resource parameters and the TTI have been described hereinabove in Fig. 2, and thus will not be particularly defined herein.

In a possible embodiment of the present disclosure, the transmitting, by the base station, the DCI to the UE may include transmitting, by the base station, the DCI to the UE through a PDCCH having a temporal length smaller than or equal to 1ms.

The transmission of the DCI has been described hereinabove in Fig. 2, and thus will not be particularly defined herein.

In a possible embodiment of the present disclosure, the transmission resource may have a temporal length smaller than or equal to 1ms and may be configured to transmit a PUSCH or a PDSCH.

The physical shared channel has been described hereinabove in Fig. 2, and thus will not be particularly defined herein.

In a possible embodiment of the present disclosure, the indication information may indicate the TTI length for the transmission resource through M bits, where M is a positive integer greater than or equal to 1.

In a possible embodiment of the present disclosure, the indication information may indicate the quantity of OFDM symbols for the transmission resource through M bits, or indicates the quantity of elements corresponding to the TTI length for the transmission resource in a set of TTI lengths through M bits. The indication information has been described hereinabove in Fig. 2, and thus will not be particularly defined herein.

In a possible embodiment of the present disclosure, the indication information may indicate the time-domain position of the transmission resource through N bits, where N is a positive integer greater than or equal to 1.

In a possible embodiment of the present disclosure, the indication information may indicate a serial number of a starting subframe for the transmission resource through N bits, or indicate a serial number of a starting OFDM symbol for the transmission resource through N bits, or indicate an offset amount between a time-domain starting position of the transmission resource and a predefined position through N bits, or indicate the quantity of elements corresponding to the time-domain starting position of the transmission resource in a set of time-domain starting positions through N bits. The indication information has been described hereinabove in Fig. 2, and thus will not be particularly defined herein.

In a possible embodiment of the present disclosure, the indication information may indicate the TTI length for the transmission resource and the time-domain position of the transmission resource through Q bits, where Q is a positive integer greater than or equal to 1. The indication information has been described hereinabove in Fig. 2, and thus will not be particularly defined herein.

In a possible embodiment of the present disclosure, the indication information may indicate the frequency-domain position of the transmission resource through P bits, and the frequency-domain position includes a position of a RB occupied by the transmission resource or a position of a subcarrier occupied by the transmission resource, where P is a positive integer greater than or equal to 1. The indication information has been described hereinabove in Fig. 2, and thus will not be particularly defined herein.

It should be appreciated that, the above transmission resource indication method may also be applied to the UE in the network as shown in Fig.1, i.e., the above method may be implemented by the UE.

According to the transmission resource indication method in the embodiments of the present disclosure, the base station generates the DCI, and the DCI includes the indication information indicating one or more of the TTI length for the transmission resource, the time-domain position of the transmission resource and the frequency-domain of the transmission resource. Then, the base station transmits the DCI to the UE, so as to enable the UE to determine the transmission resource in accordance with the indication information and perform the transmission on the transmission resource. As a result, it is able for the UE to know the transmission resource.

The present disclosure further provides in some embodiments a UE which, as shown in Fig.7, includes: a reception module 71 configured to receive DCI from a base station, the DCI including indication information indicating one or more of a TTI length for a transmission resource, a time-domain position of the transmission resource and a frequency-domain of the transmission resource; and a transmission module 72 configured to determine the transmission resource in accordance with the indication information and performing transmission on the transmission resource.

In a possible embodiment of the present disclosure, the reception module 71 is further configured to receive the DCI transmitted by the base station through a PDCCH having a temporal length smaller than or equal to 1ms.

In a possible embodiment of the present disclosure, the transmission resource may have a temporal length smaller than or equal to 1ms and may be configured to transmit a PUSCH or a PDSCH.

In a possible embodiment of the present disclosure, the indication information may indicate the TTI length for the transmission resource through M bits, where M is a positive integer greater than or equal to 1.

In a possible embodiment of the present disclosure, the indication information may indicate the quantity of OFDM symbols for the transmission resource through M bits, or indicate the quantity of elements corresponding to the TTI length for the transmission resource in a set of TTI lengths through M bits.

In a possible embodiment of the present disclosure, the indication information may indicate the time-domain position of the transmission resource through N bits, where N is a positive integer greater than or equal to 1.

In a possible embodiment of the present disclosure, the indication information may indicate a serial number of a starting subframe for the transmission resource through N bits, or indicate a serial number of a starting OFDM symbol for the transmission resource through N bits, or indicate an offset amount between a time-domain starting position of the transmission resource and a predefined position through N bits, or indicate the quantity of elements corresponding to the time-domain starting position of the transmission resource in a set of time-domain starting positions through N bits. In a possible embodiment of the present disclosure, the indication information may indicate the TTI length for the transmission resource and the time-domain position of the transmission resource through Q bits, where Q is a positive integer greater than or equal to 1.

In a possible embodiment of the present disclosure, the indication information may indicate the frequency-domain position of the transmission resource through P bits, and the frequency-domain position includes a position of a RB occupied by the transmission resource or a position of a subcarrier occupied by the transmission resource, where P is a positive integer greater than or equal to 1.

It should be appreciated that, the UE may be that mentioned in Figs. 1-6 with a same technical effect, which will not be particularly defined herein.

The present disclosure further provides in some embodiments a base station which, as shown in Fig.8, includes: a generation module 81 configured to generate DCI, the DCI including indication information indicating one or more of a TTI length for a transmission resource, a time-domain position of the transmission resource and a frequency-domain of the transmission resource; and a transmission module 82 configured to transmit the DCI to a UE, so as to enable the UE to determine the transmission resource in accordance with the indication information and perform transmission on the transmission resource.

In a possible embodiment of the present disclosure, the transmission module 82 is further configured to transmit the DCI to the UE through a PDCCH having a temporal length smaller than or equal to 1ms.

In a possible embodiment of the present disclosure, the transmission resource may have a temporal length smaller than or equal to 1ms and may be configured to transmit a PUSCH or a PDSCH.

In a possible embodiment of the present disclosure, the indication information may indicate the TTI length for the transmission resource through M bits, where M is a positive integer greater than or equal to 1.

In a possible embodiment of the present disclosure, the indication information may indicate the quantity of OFDM symbols for the transmission resource through M bits, or indicate the quantity of elements corresponding to the TTI length for the transmission resource in a set of TTI lengths through M bits.

In a possible embodiment of the present disclosure, the indication information may indicate the time-domain position of the transmission resource through N bits, where N is a positive integer greater than or equal to 1.

In a possible embodiment of the present disclosure, the indication information may indicate a serial number of a starting subframe for the transmission resource through N bits, or indicate a serial number of a starting OFDM symbol for the transmission resource through N bits, or indicate an offset amount between a time-domain starting position of the transmission resource and a predefined position through N bits, or indicate the quantity of elements corresponding to the time-domain starting position of the transmission resource in a set of time-domain starting positions through N bits. In a possible embodiment of the present disclosure, the indication information may indicate the TTI length for the transmission resource and the time-domain position of the transmission resource through Q bits, where Q is a positive integer greater than or equal to 1.

In a possible embodiment of the present disclosure, the indication information may indicate the frequency-domain position of the transmission resource through P bits, and the frequency-domain position includes a position of a RB occupied by the transmission resource or a position of a subcarrier occupied by the transmission resource, where P is a positive integer greater than or equal to 1.

It should be appreciated that, the base station may be that mentioned in Figs. 1-6 with a same technical effect, which will not be particularly defined herein.

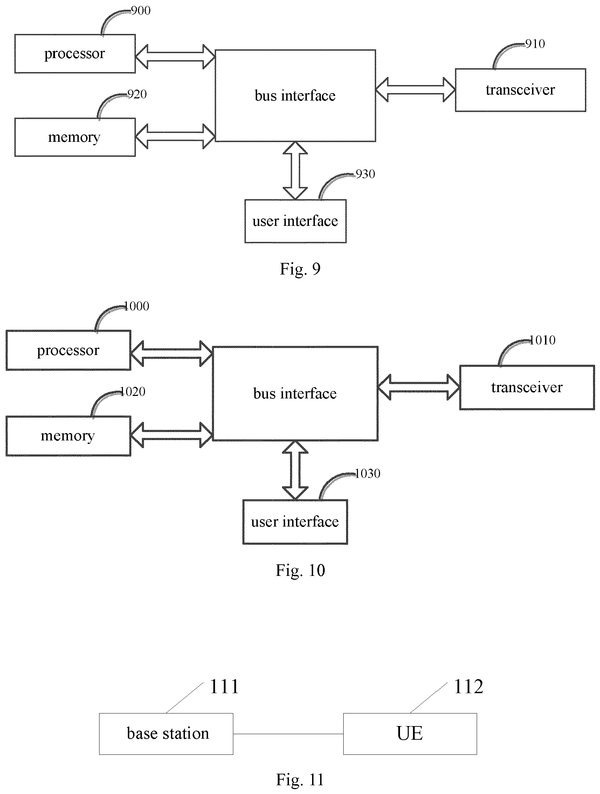

The present disclosure further provides in some embodiments a UE which, as shown in Fig.9, includes a processor 900, a transceiver 910, a memory 920, a user interface 930 and a bus interface. The processor 900 is configured to read a program stored in the memory 920, so as to: receive through the transceiver 910 DCI from a base station, the DCI including indication information indicating one or more of a TTI length for a transmission resource, a time-domain position of the transmission resource and a frequency-domain of the transmission resource; and determine the transmission resource in accordance with the indication information and performing transmission on the transmission resource through the transceiver 910. The transceiver 910 is configured to receive and transmit data under the control of the processor 900.

In Fig.9, bus architecture may include any quantity of buses and bridges connected to each other, so as to connect various circuits for one or more processors 900 and one or more memories 920. In addition, as is known in the art, the bus architecture may be used to connect any other circuits, such as a circuit for a peripheral device, a circuit for a voltage stabilizer and a power management circuit, which are not particularly defined herein. Bus interfaces may be provided, and the transceiver 910 may consist of a plurality of elements, i.e., a transmitter and a receiver for communication with any other devices over a transmission medium. With respect to different UEs, the user interface 930 may also be provided for devices which are to be arranged inside or outside the UE, and these devices may include but not limited to a keypad, a display, a speaker, a microphone and a joystick. The processor 900 may take charge of managing the bus architecture as well as general processings. The memory 920 may store therein data for the operation of the processor 900.

In a possible embodiment of the present disclosure, the processor 900 is further configured to receive through the transceiver 910 the DCI transmitted by the base station through a PDCCH having a temporal length smaller than or equal to 1ms.

In a possible embodiment of the present disclosure, the transmission resource may have a temporal length smaller than or equal to 1ms and may be configured to transmit a PUSCH or a PDSCH.

In a possible embodiment of the present disclosure, the indication information may indicate the TTI length for the transmission resource through M bits, where M is a positive integer greater than or equal to 1.

In a possible embodiment of the present disclosure, the indication information may indicate the quantity of OFDM symbols for the transmission resource through M bits, or indicate the quantity of elements corresponding to the TTI length for the transmission resource in a set of TTI lengths through M bits.

In a possible embodiment of the present disclosure, the indication information may indicate the time-domain position of the transmission resource through N bits, where N is a positive integer greater than or equal to 1.

In a possible embodiment of the present disclosure, the indication information may indicate a serial number of a starting subframe for the transmission resource through N bits, or indicate a serial number of a starting OFDM symbol for the transmission resource through N bits, or indicate an offset amount between a time-domain starting position of the transmission resource and a predefined position through N bits, or indicate the quantity of elements corresponding to the time-domain starting position of the transmission resource in a set of time-domain starting positions through N bits. In a possible embodiment of the present disclosure, the indication information may indicate the TTI length for the transmission resource and the time-domain position of the transmission resource through Q bits, where Q is a positive integer greater than or equal to 1.

In a possible embodiment of the present disclosure, the indication information may indicate the frequency-domain position of the transmission resource through P bits, and the frequency-domain position includes a position of a RB occupied by the transmission resource or a position of a subcarrier occupied by the transmission resource, where P is a positive integer greater than or equal to 1.

It should be appreciated that, the UE may be that mentioned in Figs. 1-6 with a same technical effect, which will not be particularly defined herein.

The present disclosure further provides in some embodiments a base station which, as shown in Fig.10, includes a processor 1000, a transceiver 1010, a memory 1020, a user interface 1030 and a bus interface. The processor 1000 is configured to read a program stored in the memory 1020, so as to: generate DCI, the DCI including indication information indicating one or more of a TTI length for a transmission resource, a time-domain position of the transmission resource and a frequency-domain of the transmission resource; and transmit through the transceiver 1010 the DCI to a UE, so as to enable the UE to determine the transmission resource in accordance with the indication information and perform transmission on the transmission resource. The transceiver 1010 is configured to receive and transmit data under the control of the processor 1000.

In Fig.10, bus architecture may include a quantity of buses and bridges connected to each other, so as to connect various circuits for one or more processors 1000 and one or more memories 1020. In addition, as is known in the art, the bus architecture may be used to connect any other circuits, such as a circuit for a peripheral device, a circuit for a voltage stabilizer and a power management circuit. Bus interface may be provided, and the transceiver 1010 may consist of a plurality of elements, i.e., a transmitter and a receiver for communication with any other devices over a transmission medium. The processor 1000 may take charge of managing the bus architecture as well as general processings. The memory 1020 may store therein data for the operation of the processor 1000.

In a possible embodiment of the present disclosure, the processor 1000 is further configured to transmit through the transceiver 1010 the DCI to the UE through a PDCCH having a temporal length smaller than or equal to 1ms.

In a possible embodiment of the present disclosure, the transmission resource may have a temporal length smaller than or equal to 1ms and may be configured to transmit a PUSCH or a PDSCH.

In a possible embodiment of the present disclosure, the indication information may indicate the TTI length for the transmission resource through M bits, where M is a positive integer greater than or equal to 1.

In a possible embodiment of the present disclosure, the indication information may indicate the quantity of OFDM symbols for the transmission resource through M bits, or indicate the quantity of elements corresponding to the TTI length for the transmission resource in a set of TTI lengths through M bits.

In a possible embodiment of the present disclosure, the indication information may indicate the time-domain position of the transmission resource through N bits, where N is a positive integer greater than or equal to 1.

In a possible embodiment of the present disclosure, the indication information may indicate a serial number of a starting subframe for the transmission resource through N bits, or indicate a serial number of a starting OFDM symbol for the transmission resource through N bits, or indicate an offset amount between a time-domain starting position of the transmission resource and a predefined position through N bits, or indicate the quantity of elements corresponding to the time-domain starting position of the transmission resource in a set of time-domain starting positions through N bits. In a possible embodiment of the present disclosure, the indication information may indicate the TTI length for the transmission resource and the time-domain position of the transmission resource through Q bits, where Q is a positive integer greater than or equal to 1.

In a possible embodiment of the present disclosure, the indication information may indicate the frequency-domain position of the transmission resource through P bits, and the frequency-domain position includes a position of a RB occupied by the transmission resource or a position of a subcarrier occupied by the transmission resource, where P is a positive integer greater than or equal to 1.

It should be appreciated that, the base station may be that mentioned in Figs. 1-6 with a same technical effect, which will not be particularly defined herein.

The present disclosure further provides in some embodiments a transmission resource indication system which, as shown in Fig.11, includes: a base station 111 configured to generate DCI and transmit the DCI to a UE 112, the DCI including indication information indicating one or more of a TTI length for a transmission resource, a time-domain position of the transmission resource and a frequency-domain of the transmission resource; and the UE 112 configured to receive the DCI from the base station 111, determine the transmission resource in accordance with the indication information, and perform transmission on the transmission resource.

It should be appreciated that, the base station 111 and the UE 112 may be those mentioned in Figs.1-6 with a same technical effect, which will not be particularly defined herein.

It should be appreciated that, the device and method may be implemented in any other ways. For example, the embodiments for the apparatus is merely for illustrative purposes, and the modules or units are provided merely on the basis of their logic functions. During the actual application, some modules or units may be combined together or integrated into another system. Alternatively, some functions of the module or units may be omitted or not executed. In addition, the coupling connection, direct coupling connection or communication connection between the modules or units may be implemented via interfaces, and the indirect coupling connection or communication connection between the modules or units may be implemented in an electrical or mechanical form or in any other form.

In addition, the functional units in the embodiments of the present disclosure may be integrated into a processing unit, or the functional units may exist independently, or two or more functional units may be combined together. The units may be implemented in the form of hardware, or hardware plus software functional units.

The units in the form of the software functional units may be stored in a computer-readable medium. The software unction units may be stored in a storage medium (a universal serial bus (USB) flash disk, a mobile hard disk (HD), a ROM, a RAM, a magnetic disk or an optical disk) and include several instructions so as to enable a computer equipment (a personal computer, a server or network equipment) to execute parts of the steps of the methods according to the embodiments of the present disclosure.

## Claims

1. A transmission resource indication method, comprising:
receiving (201), by a User Equipment, UE, Downlink Control Information, DCI, from a base station, the DCI comprising indication information indicating a Transmission Time Interval, TTI, length for a transmission resource, a time-domain position of the transmission resource and a frequency-domain position of the transmission resource; and
determining (202), by the UE, the transmission resource in accordance with the indication information and performing transmission on the transmission resource,
**characterized in that**
the indication information indicates the TTI length for the transmission resource and the time-domain position of the transmission resource through Q bits, where Q is a positive integer greater than or equal to 1;
the TTI length and the time-domain position in the indication information are indicated through the joint encoding of the bits.

2. The transmission resource indication method according to claim 1, wherein the receiving, by the UE, the DCI from the base station comprises receiving, by the UE, the DCI transmitted by the base station through a Physical Downlink Control Channel, PDCCH, having a temporal length smaller than or equal to 1ms.

3. The transmission resource indication method according to claim 1 or 2, wherein the transmission resource has a temporal length smaller than or equal to 1ms and is used to transmit a Physical Uplink Shared Channel, PUSCH, or a Physical Downlink Shared Channel, PDSCH.

4. The transmission resource indication method according to claim 1 or 2, wherein the indication information indicates the TTI length for the transmission resource through M bits, where M is a positive integer greater than or equal to 1, optionally, the indication information indicates the quantity of Orthogonal Frequency Division Multiplexing, OFDM, symbols for the transmission resource through M bits, or indicates the quantity of elements corresponding to the TTI length for the transmission resource in a set of TTI lengths through M bits.

5. The transmission resource indication method according to claim 1 or 2, wherein the indication information indicates the time-domain position of the transmission resource through N bits, where N is a positive integer greater than or equal to 1, optionally, wherein the indication information indicates a serial number of a starting subframe for the transmission resource through N bits, or indicates a serial number of a starting OFDM symbol for the transmission resource through N bits, or indicates an offset amount between a time-domain starting position of the transmission resource and a predefined position through N bits, or indicates the quantity of elements corresponding to the time-domain starting position of the transmission resource in a set of time-domain starting positions through N bits.

6. The transmission resource indication method according to claim 1 or 2, wherein the indication information indicates the frequency-domain position of the transmission resource through P bits, and the frequency-domain position comprises a position of a Resource Block, RB, occupied by the transmission resource or a position of a subcarrier occupied by the transmission resource, where P is a positive integer greater than or equal to 1.

7. A transmission resource indication method, comprising:
generating (601), by a base station, Downlink Control Information, DCI, the DCI comprising indication information indicating a Transmission Time Interval, TTI, length for a transmission resource, a time-domain position of the transmission resource and a frequency-domain position of the transmission resource; and
transmitting (602), by the base station, the DCI to a User Equipment, UE, to enable the UE to determine the transmission resource in accordance with the indication information and perform transmission on the transmission resource,
**characterized in that**
the indication information indicates the TTI length for the transmission resource and the time-domain position of the transmission resource through Q bits, where Q is a positive integer greater than or equal to 1;
the TTI length and the time-domain position in the indication information are indicated through the joint encoding of the bits.

8. The transmission resource indication method according to claim 7, wherein the transmitting, by the base station, the DCI to the UE comprises transmitting, by the base station, the DCI to the UE through a Physical Downlink Control Channel, PDCCH, having a temporal length smaller than or equal to 1ms.

9. The transmission resource indication method according to claim 7 or 8, wherein the transmission resource has a temporal length smaller than or equal to 1ms and is used to transmit a Physical Uplink Shared Channel, PUSCH, or a Physical Downlink Shared Channel, PDSCH.

10. The transmission resource indication method according to claim 7 or 8, wherein the indication information indicates the TTI length for the transmission resource through M bits, where M is a positive integer greater than or equal to 1, optionally the indication information indicates the quantity of Orthogonal Frequency Division Multiplexing, OFDM, symbols for the transmission resource through M bits, or indicates the quantity of elements corresponding to the TTI length for the transmission resource in a set of TTI lengths through M bits.

11. The transmission resource indication method according to claim 7 or 8, wherein the indication information indicates the time-domain position of the transmission resource through N bits, where N is a positive integer greater than or equal to 1, optionally, wherein the indication information indicates a serial number of a starting subframe for the transmission resource through N bits, or indicates a serial number of a starting OFDM symbol for the transmission resource through N bits, or indicates an offset amount between a time-domain starting position of the transmission resource and a predefined position through N bits, or indicates the quantity of elements corresponding to the time-domain starting position of the transmission resource in a set of time-domain starting positions through N bits.

12. The transmission resource indication method according to claim 7 or 8, wherein the indication information indicates the frequency-domain position of the transmission resource through P bits, and the frequency-domain position comprises a position of a Resource Block, RB, occupied by the transmission resource or a position of a subcarrier occupied by the transmission resource, where P is a positive integer greater than or equal to 1.

13. A User Equipment, UE, comprising:
a reception module (71) configured to receive Downlink Control Information, DCI, from a base station, the DCI comprising indication information indicating a Transmission Time Interval, TTI, length for a transmission resource, a time-domain position of the transmission resource and a frequency-domain position of the transmission resource; and
a transmission module (72) configured to determine the transmission resource in accordance with the indication information and performing transmission on the transmission resource,
**characterized in that**
the indication information indicates the TTI length for the transmission resource and the time-domain position of the transmission resource through Q bits, where Q is a positive integer greater than or equal to 1;
the TTI length and the time-domain position in the indication information are indicated through the joint encoding of the bits.

14. Abase station, comprising:
a generation module (81) configured to generate Downlink Control Information, DCI, the DCI comprising indication information indicating a Transmission Time Interval, TTI, length for a transmission resource, a time-domain position of the transmission resource and a frequency-domain position of the transmission resource; and
a transmission module (82) configured to transmit the DCI to a User Equipment, UE, to enable the UE to determine the transmission resource in accordance with the indication information and perform transmission on the transmission resource,
**characterized in that**
the indication information indicates the TTI length for the transmission resource and the time-domain position of the transmission resource through Q bits, where Q is a positive integer greater than or equal to 1;
the TTI length and the time-domain position in the indication information are indicated through the joint encoding of the bits.

15. A transmission resource indication system, comprising:
a base station (11) configured to generate Downlink Control Information, DCI, and transmit the DCI to a User Equipment, UE, the DCI comprising indication information indicating a Transmission Time Interval, TTI, length for a transmission resource, a time-domain position of the transmission resource and a frequency-domain position of the transmission resource; and
the UE (12) configured to receive the DCI from the base station, determine the transmission resource in accordance with the indication information, and perform transmission on the transmission resource,
**characterized in that**
the indication information indicates the TTI length for the transmission resource and the time-domain position of the transmission resource through Q bits, where Q is a positive integer greater than or equal to 1;
the TTI length and the time-domain position in the indication information are indicated through the joint encoding of the bits.

## Patentansprüche

1. Übertragungsressourcenanzeigeverfahren, umfassend
Empfangen (201), durch ein Benutzerendgerät, UE, von Downlink-Steuerinformationen, DCI, von einer Basisstation, wobei die DCI Anzeigeinformationen umfassen, die eine Übertragungszeitintervall-, TTI, Länge für eine Übertragungsressource, eine Zeitdomänenposition der Übertragungsressource und eine Frequenzdomänenposition der Übertragungsressource anzeigen; und
Bestimmen (202), durch das UE, der Übertragungsressource gemäß den Anzeigeinformationen und Ausführen einer Übertragung an der Übertragungsressource,
**dadurch gekennzeichnet, dass**
die Anzeigeinformationen die TTI-Länge für die Übertragungsressource und die Zeitdomänenposition der Übertragungsressource über Q Bits anzeigen, wobei Q eine positive Ganzzahl größer oder gleich 1 ist;
die TTI-Länge und die Zeitdomänenposition in den Anzeigeinformationen durch das gemeinsame Codieren der Bits angegeben werden.

2. Übertragungsressourcenanzeigeverfahren nach Anspruch 1, wobei das Empfangen, durch das UE, der DCI von der Basisstation das Empfangen, durch das UE, der DCI, die von der Basisstation über einen physischen Downlink-Steuerkanal, PDCCH, übertragen werden, der eine zeitliche Länge aufweist, die kleiner oder gleich 1 ms ist, umfasst.

3. Übertragungsressourcenanzeigeverfahren nach Anspruch 1 oder 2, wobei die Übertragungsressource eine zeitliche Länge aufweist, die kleiner oder gleich 1 ms ist, und verwendet wird, um einen geteilten physischen Uplink-Kanal, PUSCH, oder einen geteilten physischen Downlink-Kanal, PDSCH, zu übertragen.

4. Übertragungsressourcenanzeigeverfahren nach Anspruch 1 oder 2, wobei die Anzeigeinformationen die TTI-Länge für die Übertragungsressource über M Bits anzeigen, wobei M eine positive Ganzzahl größer oder gleich 1 ist, die Anzeigeinformationen wahlweise die Menge von orthogonalen Frequenzmultiplex-, OFDM, Symbolen für die Übertragungsressource über M Bits anzeigen, oder die Menge von Elementen anzeigen, die der TTI-Länge für die Übertragungsressource in einem Satz von TTI-Längen entsprechen, über M Bits anzeigen.

5. Übertragungsressourcenanzeigeverfahren nach Anspruch 1 oder 2, wobei die Anzeigeinformationen die Zeitdomänenposition der Übertragungsressource über N Bits anzeigen, wobei N eine positive Ganzzahl größer oder gleich 1 ist, wobei die Anzeigeinformationen wahlweise eine Seriennummer eines Startteilrahmens für die Übertragungsressource über N Bits anzeigen, oder eine Seriennummer eines OFDM-Startsymbols für die Übertragungsressource über N Bits anzeigen, oder einen Versatzbetrag zwischen einer Zeitdomänenstartposition der Übertragungsressource und einer vordefinierten Position über N Bits anzeigen, oder die Menge von Elementen, die der Zeitdomänenstartposition der Übertragungsressource in einem Satz von Zeitdomänenstartpositionen entsprechen, über N Bits anzeigen.

6. Übertragungsressourcenanzeigeverfahren nach Anspruch 1 oder 2, wobei die Anzeigeinformationen die Frequenzdomänenposition der Übertragungsressource über P Bits anzeigen, und die Frequenzdomänenposition eine Position eines Ressourcenblocks, RB, die von der Übertragungsressource eingenommen wird, oder eine Position eines Unterträgers, die von der Übertragungsressource eingenommen wird, umfasst, wobei P eine positive Ganzzahl größer oder gleich 1 ist.

7. Übertragungsressourcenanzeigeverfahren, umfassend:
Generieren (601), durch eine Basisstation, von Downlink-Steuerinformationen, DCI, wobei die DCI Anzeigeinformationen umfassen, die eine Übertragungszeitintervall-, TTI, Länge für eine Übertragungsressource, eine Zeitdomänenposition der Übertragungsressource und eine Frequenzdomänenposition der Übertragungsressource anzeigen; und
Übertragen (602), durch die Basisstation, der DCI an ein Benutzerendgerät, UE, um es dem UE zu ermöglichen, die Übertragungsressource gemäß den Anzeigeinformationen zu bestimmen und eine Übertragung an der Übertragungsressource auszuführen,
**dadurch gekennzeichnet, dass**
die Anzeigeinformationen die TTI-Länge für die Übertragungsressource und die Zeitdomänenposition der Übertragungsressource über Q Bits anzeigen, wobei Q eine positive Ganzzahl größer oder gleich 1 ist;
die TTI-Länge und die Zeitdomänenposition in den Anzeigeinformationen über die gemeinsame Codierung der Bits angegeben werden.

8. Übertragungsressourcenanzeigeverfahren nach Anspruch 7, wobei das Übertragen, durch die Basisstation, der DCI an das UE das Übertragen, durch die Basisstation, der DCI an das UE über einen physischen Downlink-Steuerkanal, PDCCH, der eine zeitliche Länge aufweist, die kleiner oder gleich 1 ms ist, umfasst.

9. Übertragungsressourcenanzeigeverfahren nach Anspruch 7 oder 8, wobei die Übertragungsressource eine zeitliche Länge aufweist, die kleiner oder gleich 1 ms ist, und verwendet wird, um einen geteilten physischen Uplink-Kanal, PUSCH, oder einen geteilten physischen Downlink-Kanal, PDSCH, zu übertragen.

10. Übertragungsressourcenanzeigeverfahren nach Anspruch 7 oder 8, wobei die Anzeigeinformationen die TTI-Länge für die Übertragungsressource über M Bits anzeigen, wobei M eine positive Ganzzahl größer oder gleich 1 ist, die Anzeigeinformationen wahlweise die Menge von orthogonalen Frequenzmultiplex-, OFDM, Symbolen für die Übertragungsressource über M Bits anzeigen oder die Menge von Elementen, die der TTI-Länge für die Übertragungsressource in einem Satz von TTI-Längen entsprechen, über M Bits anzeigen.

11. Übertragungsressourcenanzeigeverfahren nach Anspruch 7 oder 8, wobei die Anzeigeinformationen die Zeitdomänenposition der Übertragungsressource über N Bits anzeigen, wobei N eine positive Ganzzahl größer oder gleich 1 ist, wobei die Anzeigeinformationen wahlweise eine Seriennummer eines Startteilrahmens für die Übertragungsressource über N Bits anzeigen, oder eine Seriennummer eines OFDM-Startsymbols für die Übertragungsressource über N Bits anzeigen, oder eine Versatzmenge zwischen einer Zeitdomänenstartposition der Übertragungsressource und einer vordefinierten Position über N Bits anzeigen, oder die Menge von Elementen, die der Zeitdomänenstartposition der Übertragungsressource in einem Satz von Zeitdomänenstartpositionen entsprechen, über N Bits anzeigen.

12. Übertragungsressourcenanzeigeverfahren nach Anspruch 7 oder 8, wobei die Anzeigeinformationen die Frequenzdomänenposition der Übertragungsressource über P Bits anzeigen, und die Frequenzdomänenposition eine Position eines Ressourcenblocks, RB, der von der Übertragungsressource eingenommen wird, oder eine Position eines Unterträgers, die von der Übertragungsressource eingenommen wird, umfasst, wobei P eine positive Ganzzahl größer oder gleich 1 ist.

13. Benutzerendgerät, UE, umfassend:
ein Empfangsmodul (71), das konfiguriert ist, um Downlink-Steuerinformationen, DCI, von einer Basisstation zu empfangen, wobei die DCI Anzeigeinformationen umfassen, die eine Übertragungszeitintervall-, TTI, Länge für eine Übertragungsressource, eine Zeitdomänenposition der Übertragungsressource und eine Frequenzdomänenposition der Übertragungsressource anzeigen; und
ein Übertragungsmodul (72), das konfiguriert ist, um die Übertragungsressource gemäß den Anzeigeinformationen zu bestimmen und Ausführen einer Übertragung an der Übertragungsressource,
**dadurch gekennzeichnet, dass**
die Anzeigeinformationen die TTI-Länge für die Übertragungsressource und die Zeitdomänenposition der Übertragungsressource über Q Bits anzeigen, wobei Q eine positive Ganzzahl größer oder gleich 1 ist;
die TTI-Länge und die Zeitdomänenposition in den Anzeigeinformationen über die gemeinsame Codierung der Bits angegeben werden.

14. Basisstation, umfassend:
ein Generierungsmodul (81), das konfiguriert ist, um Downlink-Steuerinformationen, DCI, zu generieren, wobei die DCI Anzeigeinformationen umfassen, die eine Übertragungszeitintervall-, TTI, Länge für eine Übertragungsressource, eine Zeitdomänenposition der Übertragungsressource und eine Frequenzdomänenposition der Übertragungsressource anzeigen; und
ein Übertragungsmodul (82), das konfiguriert ist, um die DCI an ein Benutzerendgerät, UE, zu übertragen, um es dem UE zu ermöglichen, die Übertragungsressource gemäß den Anzeigeinformationen anzuzeigen und eine Übertragung an der Übertragungsressource auszuführen,
**dadurch gekennzeichnet, dass**
die Anzeigeinformationen die TTI-Länge für die Übertragungsressource und die Zeitdomänenposition der Übertragungsressource über Q Bits anzeigen, wobei Q eine positive Ganzzahl größer oder gleich 1 ist;
die TTI-Länge und die Zeitdomänenposition in den Anzeigeinformationen durch die gemeinsame Codierung der Bits angegeben werden.

15. Übertragungsressourcenanzeigesystem, umfassend:
eine Basisstation (11), die konfiguriert ist, um Downlink-Steuerinformationen, DCI, zu generieren und die DCI an ein Benutzerendgerät, UE, zu übertragen, wobei die DCI Anzeigeinformationen umfassen, die eine Übertragungszeitintervall-, TTI, Länge für eine Übertragungsressource, eine Zeitdomänenposition der Übertragungsressource und eine Frequenzdomänenposition der Übertragungsressource anzeigen; und
das UE (12) konfiguriert ist, um die DCI von der Basisstation zu empfangen, die Übertragungsressource gemäß den Anzeigeinformationen zu bestimmen und eine Sendung an der Übertragungsressource auszuführen,
**dadurch gekennzeichnet, dass**
die Anzeigeinformationen die TTI-Länge für die Übertragungsressource und die Zeitdomänenposition der Übertragungsressource über Q Bits anzeigen, wobei Q eine positive Ganzzahl größer oder gleich 1 ist;
die TTI-Länge und die Zeitdomänenposition in den Anzeigeinformationen über die gemeinsame Codierung der Bits angegeben werden.

## Revendications

1. Procédé d'indication de ressource de transmission comprenant :
la réception (201), par un équipement utilisateur, UE, d'informations de commande de liaison descendante, DCI, à partir d'une station de base, les DCI comprenant des informations d'indication indiquant une longueur d'intervalle de temps de transmission, TTI, pour une ressource de transmission, une position de domaine temporel de la ressource de transmission et une position de domaine fréquentiel de la ressource de transmission ; et
la détermination (202), par l'UE, de la ressource de transmission conformément aux informations d'indication et l'exécution d'une transmission sur la ressource de transmission,
**caractérisé en ce que**
les informations d'indication indiquent la longueur de TTI pour la ressource de transmission et la position de domaine temporel de la ressource de transmission au moyen de Q bits, où Q est un entier positif supérieur ou égal à 1 ;
la longueur de TTI et la position de domaine temporel dans les informations d'indication sont indiquées par le biais du codage conjoint des bits.

2. Procédé d'indication de ressource de transmission selon la revendication 1, dans lequel la réception, par l'UE, des DCI à partir de la station de base comprend la réception, par l'UE, des DCI transmises par la station de base à travers un canal physique de commande de liaison descendante, PDCCH, ayant une longueur temporelle inférieure ou égale à 1 ms.

3. Procédé d'indication de ressource de transmission selon la revendication 1 ou 2, dans lequel la ressource de transmission a une longueur temporelle inférieure ou égale à 1 ms et est utilisée pour transmettre un canal physique partagé de liaison montante, PUSCH, ou un canal physique partagé de liaison descendante, PDSCH.

4. Procédé d'indication de ressource de transmission selon la revendication 1 ou 2, dans lequel les informations d'indication indiquent la longueur de TTI pour la ressource de transmission au moyen de M bits, où M est un entier positif supérieur ou égal à 1, éventuellement les informations d'indication indiquent la quantité de symboles de multiplexage par répartition en fréquences orthogonales, OFDM, pour la ressource de transmission au moyen de M bits ou indiquent la quantité d'éléments correspondant à la longueur de TTI pour la ressource de transmission dans un ensemble de longueurs de TTI au moyen de M bits.

5. Procédé d'indication de ressource de transmission selon la revendication 1 ou 2, dans lequel les informations d'indication indiquent la position de domaine temporel de la ressource de transmission au moyen de N bits, où N est un entier positif supérieur ou égal à 1, éventuellement dans lequel les informations d'indication indiquent un numéro séquentiel d'une sous-trame de départ pour la ressource de transmission au moyen de N bits, ou indiquent un numéro séquentiel d'un symbole OFDM de départ pour la ressource de transmission au moyen de N bits, ou indiquent une quantité de décalage entre une position de départ de domaine temporel de la ressource de transmission et une position prédéfinie au moyen de N bits, ou indiquent la quantité d'éléments correspondant à la position de départ de domaine temporel de la ressource de transmission dans un ensemble de positions de départ de domaine temporel au moyen de N bits.

6. Procédé d'indication de ressource de transmission selon la revendication 1 ou 2, dans lequel les informations d'indication indiquent la position de domaine fréquentiel de la ressource de transmission au moyen de P bits, et la position de domaine fréquentiel comprend une position d'un bloc de ressource, RB, occupé par la ressource de transmission ou une position d'une sous-porteuse occupée par la ressource de transmission, où P est un entier positif supérieur ou égal à 1.

7. Procédé d'indication de ressource de transmission comprenant :
la génération (601), par une station de base, d'informations de commande de liaison descendante, DCI, les DCI comprenant des informations d'indication indiquant une longueur d'intervalle de temps de transmission, TTI, pour une ressource de transmission, une position de domaine temporel de la ressource de transmission et une position de domaine fréquentiel de la ressource de transmission ; et
la transmission (602), par la station de base, des DCI à un équipement utilisateur, UE, pour permettre à l'UE de déterminer la ressource de transmission conformément aux informations d'indication et effectuer une transmission sur la ressource de transmission,
**caractérisé en ce que**
les informations d'indication indiquent la longueur de TTI pour la ressource de transmission et la position de domaine temporel de la ressource de transmission au moyen de Q bits, où Q est un entier positif supérieur ou égal à 1 ;
la longueur de TTI et la position de domaine temporel dans les informations d'indication sont indiquées par le biais du codage conjoint des bits.

8. Procédé d'indication de ressource de transmission selon la revendication 7, dans lequel la transmission, par la station de base, des DCI à l'UE comprend la transmission, par la station de base, des DCI à l'UE à travers un canal physique de commande de liaison descendante, PDCCH, ayant une longueur temporelle inférieure ou égale à 1 ms.

9. Procédé d'indication de ressource de transmission selon la revendication 7 ou 8, dans lequel la ressource de transmission a une longueur temporelle inférieure ou égale à 1 ms et est utilisée pour transmettre un canal physique partagé de liaison montante, PUSCH, ou un canal physique partagé de liaison descendante, PDSCH.

10. Procédé d'indication de ressource de transmission selon la revendication 7 ou 8, dans lequel les informations d'indication indiquent la longueur de TTI pour la ressource de transmission au moyen de M bits, où M est un entier positif supérieur ou égal à 1, éventuellement les informations d'indication indiquent la quantité de symboles de multiplexage par répartition en fréquences orthogonales, OFDM, pour la ressource de transmission au moyen de M bits ou indiquent la quantité d'éléments correspondant à la longueur de TTI pour la ressource de transmission dans un ensemble de longueurs de TTI au moyen de M bits.

11. Procédé d'indication de ressource de transmission selon la revendication 7 ou 8, dans lequel les informations d'indication indiquent la position de domaine temporel de la ressource de transmission au moyen de N bits, où N est un entier positif supérieur ou égal à 1, éventuellement dans lequel les informations d'indication indiquent un numéro séquentiel d'une sous-trame de départ pour la ressource de transmission au moyen de N bits, ou indiquent un numéro séquentiel d'un symbole OFDM de départ pour la ressource de transmission au moyen de N bits, ou indiquent une quantité de décalage entre une position de départ de domaine temporel de la ressource de transmission et une position prédéfinie au moyen de N bits, ou indiquent la quantité d'éléments correspondant à la position de départ de domaine temporel de la ressource de transmission dans un ensemble de positions de départ de domaine temporel au moyen de N bits.

12. Procédé d'indication de ressource de transmission selon la revendication 7 ou 8, dans lequel les informations d'indication indiquent la position de domaine fréquentiel de la ressource de transmission au moyen de P bits, et la position de domaine fréquentiel comprend une position d'un bloc de ressource, RB, occupé par la ressource de transmission ou une position d'une sous-porteuse occupée par la ressource de transmission, où P est un entier positif supérieur ou égal à 1.

13. Équipement utilisateur, UE, comprenant :
un module de réception (71) configuré pour recevoir des informations de commande de liaison descendante, DCI, à partir d'une station de base, les DCI comprenant des informations d'indication indiquant une longueur d'intervalle de temps de transmission, TTI, pour une ressource de transmission, une position de domaine temporel de la ressource de transmission et une position de domaine fréquentiel de la ressource de transmission ; et
un module de transmission (72) configuré pour déterminer la ressource de transmission conformément aux informations d'indication et l'exécution de la transmission sur la ressource de transmission,
**caractérisé en ce que**
les informations d'indication indiquent la longueur de TTI pour la ressource de transmission et la position de domaine temporel de la ressource de transmission au moyen de Q bits, où Q est un entier positif supérieur ou égal à 1 ;
la longueur de TTI et la position de domaine temporel dans les informations d'indication sont indiquées par le biais du codage conjoint des bits.

14. Station de base comprenant :
un module de génération (81) configuré pour générer des informations de commande de liaison descendante, DCI, les DCI comprenant des informations d'indication indiquant une longueur d'intervalle de temps de transmission, TTI, pour une ressource de transmission, une position de domaine temporel de la ressource de transmission et une position de domaine fréquentiel de la ressource de transmission ; et
un module de transmission (82) configuré pour transmettre les DCI à un équipement utilisateur, UE, pour permettre à l'UE de déterminer la ressource de transmission conformément aux informations d'indication et effectuer une transmission sur la ressource de transmission,
**caractérisée en ce que**
les informations d'indication indiquent la longueur de TTI pour la ressource de transmission et la position de domaine temporel de la ressource de transmission au moyen de Q bits, où Q est un entier positif supérieur ou égal à 1 ;
la longueur de TTI et la position de domaine temporel dans les informations d'indication sont indiquées par le biais du codage conjoint des bits.

15. Système d'indication de ressource de transmission comprenant :
une station de base (11) configurée pour générer des informations de commande de liaison descendante, DCI, et transmettre les DCI à un équipement utilisateur, UE, les DCI comprenant des informations d'indication indiquant une longueur d'intervalle de temps de transmission, TTI, pour une ressource de transmission, une position de domaine temporel de la ressource de transmission et une position de domaine fréquentiel de la ressource de transmission ; et
l'UE (12) configuré pour recevoir les DCI à partir de la station de base, déterminer la ressource de transmission conformément aux informations d'indication et effectuer une transmission sur la ressource de transmission,
**caractérisé en ce que**
les informations d'indication indiquent la longueur de TTI pour la ressource de transmission et la position de domaine temporel de la ressource de transmission au moyen de Q bits, où Q est un entier positif supérieur ou égal à 1 ;
la longueur de TTI et la position de domaine temporel dans les informations d'indication sont indiquées par le biais du codage conjoint des bits.
